Europäisches Patentamt

European Patent Office

Office européen des brevets

(11) Publication number: **0 156 916 B1**

(12) **EUROPEAN PATENT SPECIFICATION**

(45) Date of publication of patent specification: **28.11.90**

(51) Int. Cl.⁵: **G 11 B 11/10**

(21) Application number: **84903357.6**

(22) Date of filing: **05.09.84**

(86) International application number:
**PCT/JP84/00424**

(87) International publication number:
**WO 85/01144 14.03.85 Gazette 85/07**

(54) **PHOTOMAGNETIC RECORDING AND REPRODUCING APPARATUS HAVING DEVICE FOR DETECTING DIRECTION OF MAGNETIZATION OF MAGNETIC RECORDING MEDIUM.**

(30) Priority: **05.09.83 JP 162817/83**

(43) Date of publication of application:
**09.10.85 Bulletin 85/41**

(45) Publication of the grant of the patent:
**28.11.90 Bulletin 90/48**

(84) Designated Contracting States:
**DE FR GB**

(56) References cited:
**WO-A-80/01016**
**GB-A-2 083 677**
**GB-A-2 101 793**
**JP-A-5 158 303**
**JP-A-5 350 777**
**JP-A-59 119 504**
**US-A-3 731 290**

**PATENT ABSTRACTS OF JAPAN, vol. 6, no. 233
(P-156)1111r, 19th November 1982; & JP-A-57
133 503**
**Funkschau 17/1983, p. 56-60**

(73) Proprietor: **SONY CORPORATION**
**7-35 Kitashinagawa 6-Chome Shinagawa-ku
Tokyo 141 (JP)**

(72) Inventor: **SATO, Noboru Sony Corporation
7-35, Kitashinagawa 6-chome
Shinagawa-ku Tokyo 141 (JP)**
Inventor: **WATANABE, Kenjirou Sony
Corporation
7-35, Kitashinagawa 6-chome
Shinagawa-ku Tokyo 141 (JP)**

(74) Representative: **TER MEER - MÜLLER -
STEINMEISTER & PARTNER
Mauerkircherstrasse 45
D-8000 München 80 (DE)**

## Description

### TECHNICAL FIELD

This invention relates to an apparatus as it is used for recording information onto a magnetic recording medium, for reproducing the recorded information, and for erasing such information.

### PRIOR ART

A magneto-optical recording and reproducing apparatus as mentioned above, using the Kerr effect, is known e.g. from GB—A—2 083 677. For being able to record and to erase information, that apparatus comprises a rotatable magnet. This magnet generates an auxiliary bias magnetic field in the direction opposite to the magnetization direction in non-record areas. For forming record areas allocations, where the beam spot of laser light is incident. When being turned, the magnet provides a field in the same direction as the magnetization direction in the non-record areas for erasing information of locations where the beam spot of the laser light is incident. The directions of the magnetic fields are perpendicular to the disc.

When using such an apparatus, the operator has to check carefully orientation of the magnetic disc when he inserts the disc into the apparatus. When the orientation is wrong, information is erased where it should be recorded and vice versa.

It is the object of the present invention to provide a magneto-optical recording and reproducing apparatus which makes an operator free from the duty to check carefully the orientation of a disc when inserting it into the apparatus.

### DISCLOSURE OF THE INVENTION

The apparatus according to the invention determines the directions of the auxiliary bias magnetic fields and the erasing field automatically. For this purposes it makes use of the magnetic direction in the magnetic recording medium as it is determined when the laser beam is positioned at a predetermined radial area where no record should be.

The magneto-optical recording and reproducing apparatus according to the invention is set out in claim 1.

With the inventive apparatus, a user can always correctly carry out the recording and repropducing without having the necessity to carefully check the direction of the disc when inserting the disc.

### BRIEF DESCRIPTION OF THE DRAWINGS

Fig. 1 a schematic block diagram showing a magneto-optical recording and reproducing apparatus having a processing means for automatically determining the orientation of magnetization in non-record areas of an optical disc which is also schematically shown in Fig. 1;

Fig. 2 a top view of a magneto-optical disc having predetermined non-record areas; and

Fig. 3 a block diagram showing a signal processing circuit.

### BEST MODE FOR CARRYING OUT THE INVENTION

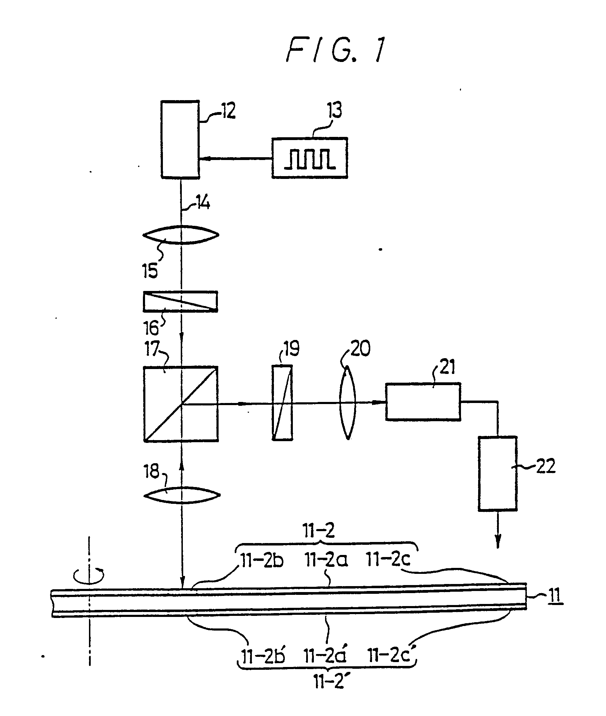

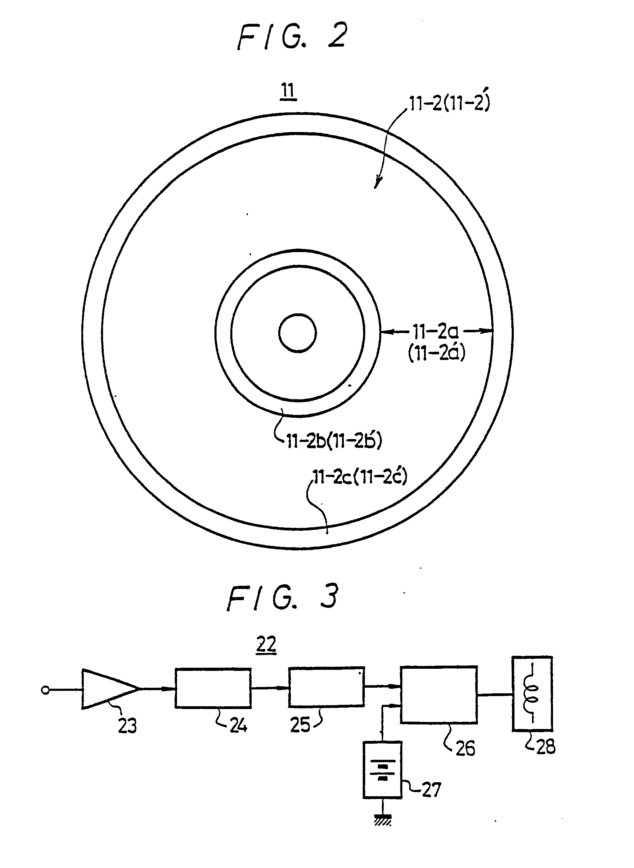

An embodiment of a magnetization direction detecting apparatus for detecting a magnetization direction of a magneto-optical disc according to the present invention will be described with reference to Fig. 1 and the followings. Referring to the figures, reference numeral 11 designates a magneto-optical disc in which perpendicular magnetization layers 11—2 and 11—2′ each magnetized in the same direction are formed, for example, on the both surfaces thereof. As shown in Fig. 2, reference numerals 11—2a and 11—2a′ respectively designate signal recording areas of the perpendicular magnetization layers 11—2 and 11—2′ on the respective surfaces, 11—2b and 11—2b′ read-in portions on which no signal is recorded and 11—2c and 11—2c′ read-out portions on which no signal is recorded, respectively. Reference numeral 12 designates a laser light source section and this laser light source 12 produces a laser light 14 by intensity-modulating a laser light from a laser light oscillation source such as a semiconductor laser, a gas laser and so on with an AC signal of a single frequency produced from an oscillating circuit 13. The laser light 14 from the laser light source section 12 travelled through a lens system 15 and is then rectilinearily polarized by a polarizer 16. This rectilineally polarized laser light is irradiated under being focussed through a half mirror 17 and an objective lens 18 on the read-in portion 11—2b of one perpendicular magnetization layer 11—2 of the medium 11.

The laser light incident on the read-in portion 11—2b of the perpendicular magnetization layer 11—2 of the medium 11 as described above is reflected on this layer 11—2b, and at this time, its polarization axis is rotated due to Kerr effect in accordance with the magnetization direction in the magnetization layer 11—2b. On the other hand, this reflected laser light is bent in direction by the half mirror 17 and incident on an analyzer 19. The laser light passed through this analyzer 19 is introduced through a lens system 20 to a photo detecting element 21, for example, a photo diode which detects and converts it to an electrical signal. The electrical signal thus converted by the photo detecting element 21 is processed by a processing circuit 22 which then produces desired control signals. On the basis of the control signals, for example, an electromagnetic coil is energized to produce an auxiliary bias magnetic field for use in recording, changing its polarity and the control for starting the recording is carried out. As, for example, shown in Fig. 3, this processing circuit 22 comprises an amplifier 23, a low-pass filter 24, an integrating circuit 25 and a comparing circuit 26. The comparing circuit 26 compares the voltage from the photo detecting element with a reference voltage from a reference voltage source 27 to produce a compared output by which, for example, a coil 28 for producing the aforedescribed auxiliary bias magnetic field or the erasing magnetic field is energized and the energized direction is determined to thereby apply the predetermined auxiliary bias magnetic field or an erasing magnetic field to the recording area 11—2a of the perpendicular layer.

According to the above-described arrangement, since the rotation angle produced by Kerr effect acting on the rectilinearly polarized laser light incident on the magnetization layer varies dependent on the magnetization direction of the magnetization layer 11—2b, it is possible to detect the magnetization direction as the light amount of the reflected light by passing it through the analyzer 19. In, for example, Fig. 1, under the condition that the medium 11 whose magnetization direction is to be detected is replaced with a magnetization layer whose magnetization is known already, for example, a magnetization layer magnetized in the direction from the lower side to the upper side in Fig. 1 and the polarization axis of the analyzer 19 is determined so as to pass the reflected light of the laser light passed through the polarizer 16, if the detected magnetization layer is magnetized upward in Fig. 1, the amount of light passing through the analyzer 19 is increased, while if the detected magnetization layer is magnetized downward, the amount of light is decreased. Thus, the magnetization direction can be detected by detecting the increase or decrease of the light amount by the photo detecting element 21, for example, photo diode. In this case, as described above, when the irradiation laser light is modulated by the AC signal, an output signal of the frequency same as the frequency of the AC signal is produced from the detecting element 21 so that the magnetization direction of the detected magnetization layer 11—2b is produced as the difference of the output level. Accordingly, if this output is processed by the processing circuit 22, it is possible to apply the suitable recording or erasing magnetic field in accordance with the magnetization direction of the magnetization layer.

Such operation is similarly carried out on the second perpendicular magnetization layer 11—2'.

## Claims

1. A magneto-optical recording and reproducing apparatus comprising:

a laser (10) for irradiating rectilinearly polarized laser light onto a magnetic recording medium of a magneto-optical disc,

a means (28) for generating an auxiliary bias magnetic field for recording and an erasing field whose direction are perpendicular to the disc and opposite to each other,

the polarity of the auxiliary bias magnetic field and the erasing field being selectable in response to the non-recorded magnetization state of the recording medium, and

means for detecting the magnetization direction of said recording medium at irradiated areas of the disc from the polarization of the laser light reflected from said areas, characterized in that

a means is provided for positioning the laser beam at predetermined radial areas where no record should be, and

a means (22) for supplying a signal to said means (28) for generating the auxiliary bias magnetic field and the erasing field in order to automatically select the directions of said fields in response to said detected magnetization direction at said predetermined radial areas.

2. An apparatus as claimed in claim 1, characterized in that processing means (19—22) comprise, for determining the magnetization direction, a photodetecting element (21) for measuring the intensity of the reflected laser light after it has travelled through an analyzer (19) and a comparator (26) for comparing the level of signal from said photo detecting element with a reference level.

3. An apparatus as claimed in claim 2, characterized in that said rectilinearly polarized laser light is modulated in strength by an AC signal and said output level is obtained from said photo detecting element through a low pass filter (24) and an integrator (25).

## Patentansprüche

1. Fotomagnetische Aufnahme- und Wiedergabevorrichtung mit

einem Laser (10) zum Einstrahlen linear polarisierten Laserlichts auf ein magnetisches Aufzeichnungsmedium einer fotomagnetischen Platte,

einer Einrichtung (28) zum Erzeugen eines Hilfs-Vormagnetisierungsfeldes zum Aufzeichnen und eines Löschfeldes, deren Richtungen rechtwinklig zur Platte und entgegengesetzt zueinander stehen, wobei die Polaritäten des Hilfs-Vormagnetisierungsfeldes und des Löschfeldes, abhängig vom Magnetisierungszustand es Aufzeichnungsmediums bei fehlender Aufzeichnung wählbar sind, und

einer Einrichtung zum Feststellen der Magnetisierungsrichtung des Aufzeichnungsmediums in bestrahlten Bereichen der Platte aus der Polarisation des Laserlichts, das von diesen Bereichen reflektiert wird, dadurch gekennzeichnet, daß

eine Einrichtung vorhanden ist, zum Positionieren des Laserstrahls auf vorgegebene Randbereiche, in denen keine Aufzeichnung vorhanden sein sollte, und

eine Einrichtung (22) vorhanden ist, zum Zuführen eines Signals zur Einrichtung (28) zum Erzeugen des Hilfs-Vormagnetisierungsfeldes und des Löschfeldes, um automatisch die Richtungen dieser Felder abhängig von derjenigen Magnetisierungsrichtung zu wählen, wie sie in diesen vorgegebenen radialen Bereichen festgestellt wurde.

2. Vorrichtung nach Anspruch 1, dadurch gekennzeichnet, daß ein Datenverarbeitungsmittel (19—22) zum Bestimmen der Magnetisierungsrichtung ein Fotodetektorelement (21) aufweist zum Messen der Intensität des reflektierten Laserlichts, nachdem es einen Analysator (19) durchquert hat, und einen Komparator (26) aufweist, zum Vergleichen des Pegels des Signals vom Fotodetektorelement mit einem Bezugspegel.

3. Vorrichtung nach Anspruch 2, dadurch gekennzeichnet, daß das linear polarisierte Laserlicht in seiner Stärke durch ein Wechselspannungssignal moduliert wird und der Ausgangspegel vom Fotodetektorelement durch ein Tiefpaßfilter (24) und einen Integrator (25) erhalten wird.

**Revendications**

1. Appareil d'enregistrement et de reproduction magnéto-optique comprenant:

un laser (10) servant à envoyer un faisceau laser polarisé rectilignement sur un support d'enregistrement magnétique d'un disque magnéto-optique,

un moyen (28) servant à produire un champ magnétique de préaimantation auxiliaire servant à l'enregistrement et un champ d'effacement, dont les directions sont perpendiculaire au disque et qui sont de sens mutuellement opposées, la polarité du champ magnétique de préaimantation auxiliaire et du champ d'effacement pouvant être sélectionnée en fonction de l'état d'aimantation non enregistré du support d'enregistrement, et

un moyen servant à détecter le sens d'aimantation dudit support d'enregistrement en des zones éclairées du disque à partir de la polarisation du faisceau laser réfléchi par lesdites zones, caractérisé en ce que:

un moyen est prévu pour positionner le faisceau laser en des zones radiales prédéterminées où aucun enregistrement ne doit être fait, et

un moyen (22) servant à fournir un signal audit moyen (28) de production du champ magnétique de préaimantation auxiliaire et du champ d'effacement afin de sélectionner automatiquement les sens desdits champs en fonction dudit sens d'aimantation détecté sur lesdites zones radiales prédéterminées.

2. Appareil selon la revendication 1, caractérisé en ce qu'un moyen de traitement (19—22) comprend, pour déterminer le sens d'aimantation, un élément de photodétection (21) servant à mesurer l'intensité du faisceau laser réfléchi après qu'il a traversé un analyseur (19), et un comparateur (26) servant à comparer le niveau du signal venant dudit élément de photodétection avec un niveau de référence.

3. Appareil selon la revendication 2, caractérisé en ce que ledit faisceau laser rectilignement polarisé est modulé en intensité par un signal de courant alternatif et ledit niveau de sortie est obtenu dudit élément de photodétection via un filtre passe-bas (24) et un intégrateur (25).

# FIG. 1

# FIG. 2

11

11-2(11-2´)

11-2a
(11-2á)

11-2b(11-2b́)

11-2c(11-2ć)

# FIG. 3

22

23    24    25    26    28

27